# EUROPEAN PATENT APPLICATION

(11) **EP 4 742 427 A1**
(43) Date of publication of application: **13.05.2026**
(21) Application number: 25208175.7
(22) Date of filing: 13.10.2025
(51) Int. Cl.: H01M 50/533, H01M 50/54

(54) **BATTERY AND BATTERY PACK INCLUDING THE SAME**

(30) Priority: 12.11.2024 KR 20240159719
(71) Applicant: SAMSUNG SDI CO., LTD., Yongin-si, Gyeonggi-do 17084 (KR)
(72) Inventor: JUNG, Yeon Ho, 16678 Suwon-si, Gyeonggi-do (KR); LIM, Hyun Young, 16678 Suwon-si, Gyeonggi-do (KR)
(74) Representative: Gulde & Partner

(57) **Abstract**

A battery and a battery pack including the same are disclosed. A battery includes a case, an electrode assembly accommodated in the case and including an electrode, a tab connected to the electrode and extending from the electrode assembly, a cap assembly facing the electrode assembly and including a terminal, and a current collector assembly between the electrode assembly and the cap assembly, and including a current collector plate joined to the tab, and a current collector coupled to the current collector plate and joined to the terminal.

## Description

### Field

Various aspects described herein relate to a battery.

Various aspects described herein relate to a battery pack including one or more batteries.

### Description of the Related Art

Unlike a primary battery that cannot be recharged, a secondary battery is a battery that can be recharged and discharged. A low-capacity secondary battery may be used for portable small-sized electronic devices, such as smartphones, feature phones, notebook computers, digital cameras, and camcorders, and a high-capacity secondary battery is widely used as a power source for driving a motor and a power storage battery in hybrid vehicles or electric vehicles. Such a secondary battery includes electrodes including a positive electrode and/or a negative electrode, an electrode assembly including the electrodes, a case that accommodates the electrode assembly, electrode terminals connected to the electrode assembly, and the like.

As technology advances, secondary batteries with high capacity are required. Accordingly, a plurality of secondary batteries may be electrically connected and used. For example, the secondary battery may be applied to an electronic device in the form of a battery module including a plurality of secondary batteries, and/or a battery pack including a plurality of secondary battery modules. The secondary battery pack may also be configured by a plurality of secondary batteries. In this case, the electronic device is an electronic device that requires high power and/or high capacity and includes, for example, an electric vehicle or the like.

A secondary battery typically includes an electrode assembly in which a positive electrode, a separator, and a negative electrode are alternately arranged. The electrode assembly is accommodated inside a case. A plurality of positive and negative electrodes (herein referred to as "electrodes") constituting the electrode assembly are electrically connected to the outside through positive and negative electrode tabs (herein referred to as "electrode tabs"), respectively. That is, a plurality of positive electrode tabs and a plurality of negative electrode tabs are electrically connected to a positive electrode terminal and a negative electrode terminal (herein referred to as "electrode terminals"), which are installed on a cap plate, respectively.

To establish an electrical connection between the plurality of electrode tabs and the electrode terminal, a connection assembly including one or more connection members is disposed between the plurality of electrode tabs and the electrode terminal. The connection assembly can electrically connect the plurality of electrode tabs to the electrode terminal by joining a portion thereof to the plurality of electrode tabs and another portion thereof to the electrode terminal. In the connection assembly, the connection member joined to the plurality of electrode tabs and the connection member joined to the electrode terminal may be different parts of a single structure or separate structures that are coupled together.

Such a connection assembly can be referred to as a current collector assembly that performs a function of gathering current supplied from the plurality of electrode tabs and transmitting the current to the electrode terminal. A shape and configuration of the current collector assembly can be implemented in various ways depending on a type, internal structure, specifications, and the like of a secondary battery.

The above-described information disclosed in the background technology of the present disclosure is provided to improve understanding of the background of the present disclosure and, thus, may include information that does not form the related art.

### SUMMARY

According to an aspect of embodiments, a battery including a current collector assembly with an improved structure and reduced manufacturing costs, and a battery pack including the same, are provided. However, aspects and problems to be solved by the present disclosure are not limited to the above-mentioned aspects and problems to be solved, and other aspects and problems to be solved not mentioned may be clearly understood by those skilled in the art from the following description.

According to one or more embodiments, a current collector assembly for a battery is provided, the current collector assembly may be configured as described herein in relation to a battery and/or a battery pack. In some aspects, the current collector assembly includes a current collector plate and a current collector coupled (e.g., attached) to the current collector plate. In some aspects, the current collector and the current collector plate may be configured, in some aspects, as a male-female fitting to be assembled (e.g., to be directly coupled to one another). The current collector may include, in some aspects, a coupling protrusion at an end portion of the current collector, and the current collector plate may include a coupling hole into which the coupling protrusion is insertable and couplable. In some aspects, the current collector may include a current collector body to be joined to a terminal (e.g., a terminal of a cap assembly of a battery) through another end portion of the current collector, and a flange between the current collector body and the coupling protrusion to be in direct physical contact with the current collector plate. In some aspects, the current collector body, the flange, and the coupling protrusion may be integrally formed. In some aspects, the current collector body may have a cylindrical shape with a first diameter and a first height, and the flange may have a cylindrical shape with a second diameter greater than the first diameter and a second height. In some aspects, the current collector body may be forged of a round bar material. In some aspects, the current collector and the current collector plate may be joined (e.g., directly attached to one another) through butt welding. In some aspects, the current collector plate may include a first sub-plate in which the coupling hole is defined, and a second sub-plate extending from at least one side of the first sub-plate and joined to (e.g., directly attached to) the tab. In some aspects, the second sub-plate may include an inner plate joined to (e.g., directly attached to) an inner tab (e.g., a first tab of a battery connected to first electrodes of the battery). In some aspects, the second sub-plate may include an outer plate joined (e.g., directly attached to) to an outer tab (e.g., a second tab of a battery connected to second electrodes of the battery). In some aspects, the inner plate and the outer plate may extend from opposite sides of the first sub-plate. In some aspects, the current collector plate may include a first sub-plate and a second sub-plate. The second sub-plate may extend from at least one side of the first sub-plate. The first sub-plate may include a first surface configured to be not in direct physical contact to a tab of a battery. The second sub-plate may include a first surface configured to be joined to a tab of a battery. The current collector may be configured to be joined to a terminal of a cap assembly of a battery through a coupling of the current collector to a second surface of the first sub-plate. In some aspect. the current collector may include a coupling protrusion at an end portion of the current collector. In some aspects, the first sub-plate may include a coupling hole into which the coupling protrusion is insertable and couplable. In some aspects, the current collector may include a current collector body joined to the terminal through another end portion of the current collector. In some aspects, the current collector may include a flange between the current collector body and the coupling protrusion to be in direct physical contact with the second surface of the first sub-plate. According to various aspects, the current collector assembly may be part of a battery assembly for a battery that includes the current collector assembly and a cap assembly. According to various aspects, the current collector assembly may be part of a battery assembly for a battery that includes the current collector assembly, a cap assembly, and an electrode assembly. According to various aspects, the current collector assembly may be part of a battery assembly for a battery that includes the current collector assembly, a cap assembly, an electrode assembly, and a tab. In some aspects, the electrode assembly may be accommodated in a case of a battery. In some aspects, the electrode assembly may include one or more electrodes. In some aspects, the tab may be connected to the one or more electrodes. In some aspects, the tab may extend from the electrode assembly. In some aspects, the cap assembly may face the electrode assembly and may include a terminal.

According to one or more embodiments, a battery includes a case, an electrode assembly accommodated in the case and including an electrode, a tab connected to the electrode and extending from the electrode assembly, a cap assembly facing the electrode assembly and including a terminal, and a current collector assembly between the electrode assembly and the cap assembly, and including a current collector plate joined to the tab, and a current collector coupled to the current collector plate and joined to the terminal.

In one or more embodiments, the current collector and the current collector plate may be assembled through a male-female fitting. For example, the current collector may include a coupling protrusion at an end portion of the current collector, and the current collector plate may include a coupling hole into which the coupling protrusion is insertable and couplable.

In one or more embodiments, the current collector may further include a current collector body joined to the terminal through another end portion of the current collector, and a flange between the current collector body and the coupling protrusion to be in face-to-face contact with the current collector plate.

In one or more embodiments, the current collector body, the flange, and the coupling protrusion may be integrally formed.

In one or more embodiments, the current collector body may have a cylindrical shape with a first diameter and a first height, and the flange may have a cylindrical shape with a second diameter greater than the first diameter and a second height less than the first height.

In one or more embodiments, the current collector body may be forged of a round bar material.

In one or more embodiments, the current collector and the current collector plate may be joined through butt welding.

In one or more embodiments, the current collector plate may include a first sub-plate in which the coupling hole is defined, and a second sub-plate extending from at least one side of the first sub-plate and joined to the tab.

In one or more embodiments, the tab may include an inner tab and an outer tab, which extend from the electrode of a same polarity in the electrode assembly and are spaced apart from each other, and the second sub-plate may include an inner plate joined to the inner tab, and an outer plate joined to the outer tab, wherein the inner plate and the outer plate may extend from opposite sides of the first sub-plate.

According to one or more embodiments, a battery includes a case, an electrode assembly accommodated in the case and including an electrode, a tab connected to the electrode and extending from the electrode assembly, a cap assembly facing the electrode assembly and including a terminal, and a current collector assembly between the electrode assembly and the cap assembly and electrically connected to the tab and the terminal. The current collector assembly may include a current collector plate including a first sub-plate including a first surface not joined to the tab, and a second sub-plate extending from at least one side of the first sub-plate and including a first surface joined to the tab.

In one or more embodiments, the current collector assembly may include a current collector coupled to a second surface of the first sub-plate and joined to the terminal. The current collector and the first sub-plate may be assembled through a male-female fitting. For example, the current collector may include a coupling protrusion at an end portion of the current collector, and the first sub-plate may include a coupling hole into which the coupling protrusion is insertable and couplable.

In one or more embodiments, the current collector may further include a current collector body joined to the terminal through another end portion of the current collector, and a flange between the current collector body and the coupling protrusion to be in face-to-face contact with the second surface of the first sub-plate, and the current collector body, the flange, and the coupling protrusion may be integrally formed.

In one or more embodiments, the current collector body may have a cylindrical shape with a first diameter and a first height, and the flange may have a cylindrical shape with a second diameter greater than the first diameter and a second height less than the first height. The current collector body may be forged of a round bar material.

In one or more embodiments, the current collector and the first sub-plate may be joined through butt welding.

In one or more embodiments, the second sub-plate may be bent twice at a boundary with the first sub-plate, and may protrude toward the first surface to define a plane parallel to the first sub-plate.

In one or more embodiments, the tab may include an inner tab and an outer tab, which extend from the electrode of a same polarity in the electrode assembly and are spaced apart from each other, and the second sub-plate may include an inner plate joined to the inner tab, and an outer plate joined to the outer tab, and the inner plate and the outer plate may extend from opposite sides of the first sub-plate.

According to one or more embodiments, a battery pack includes a housing, and a plurality of batteries accommodated in the housing, wherein each of the batteries includes a case, an electrode assembly accommodated in the case and including an electrode, a tab connected to the electrode and extending from the electrode assembly, a cap assembly facing the electrode assembly and including a terminal, and a current collector assembly between the electrode assembly and the cap assembly, and including a current collector plate joined to the tab, and a current collector coupled to the current collector plate and joined to the terminal.

### BRIEF DESCRIPTION OF THE DRAWINGS

The following drawings included with the present specification are intended to illustrate some example embodiments of the present invention, and the spirit of the present invention will be more clearly understood from the accompanying drawings together with the following description of the invention, and thus illustrations in the drawings should not be construed as limiting the scope of the present invention, in which:
FIG. 1 is a perspective view schematically illustrating a configuration of a battery pack according to various embodiments;
FIG. 2 is a perspective view schematically illustrating a configuration of a secondary battery according to various embodiments;
FIG. 3 is an exploded perspective view schematically illustrating a configuration of the secondary battery of FIG. 2;
FIG. 4 is a cross-sectional view schematically illustrating a configuration of the secondary battery of FIG. 2;
FIG. 5 is an enlarged view of a region "A" in the cross-sectional view of FIG. 4;
FIG. 6 is a view schematically illustrating a configuration of an electrode assembly according to various embodiments;
FIG. 7A is an exploded perspective view schematically illustrating a configuration of a current collector assembly according to various embodiments;
FIG. 7B is a top view illustrating a configuration of a current collector in the current collector assembly of FIG. 7A; and
FIG. 7C is a front view illustrating the configuration of the current collector in the current collector assembly of FIG. 7A.

### DETAILED DESCRIPTION

Herein, some example embodiments will be described in further detail with reference to the accompanying drawings. However, the terms or words used in the present specification and claims are not to be construed as being limited to ordinary or dictionary meanings and are to be construed as having meanings and concepts consistent with the technical spirit based on the principle that an inventor can appropriately define concepts and terms to explain the invention of the inventor in the best way. Therefore, the embodiments described herein and the configuration illustrated in the drawings are provided as some exemplary embodiments and are not representative of the full the technical spirit, and, thus, it is to be understood that various equivalents and modifications may be made at the time of filing the present application.

Further, when used in the present specification, "comprise/include" and/or "comprising/including" may specify the presence of described shapes, numbers, steps, operations, members, elements, and/or groups thereof and may not exclude the presence or addition of one or more other shapes, numbers, steps, operations, members, elements, and/or groups thereof.

Further, for facilitating understanding of the invention, the accompanying drawings may be illustrated not to actual scale. Rather, sizes of some components may be exaggerated. In addition, the same reference numerals may be assigned to the same components in different embodiments.

The description that two objects for comparison are "the same" as each other may denote that they are the same or substantially the same as each other. Thus, the expression "the same" or "substantially the same" may include a case of having a deviation considered as a low degree, for example, a deviation within 5%. In addition, the description that a certain parameter is the same in a certain region may denote that the parameter is the same from an average perspective.

Terms including ordinals such as "first" and "second" may be used to describe various components, but the components are not limited by the terms. These terms are used to distinguish one component from another. Unless particularly described as the opposite, a first component may also be a second component.

Throughout the specification, unless particularly described otherwise, each component may be provided in a singular number or a multiple number.

Arrangement of any configuration on an "upper portion (or lower portion)" of a component or "on (or below)" the component may mean not only any configuration may be disposed to be in contact with an upper surface (or lower surface) of the component but also that another configuration may be interposed between the component and any configuration disposed on (or below) the component.

In addition, when it is described that a component is "connected," "coupled," or "accessed" to another component, these components may be directly connected, coupled, or accessed to each other, or one or more other components may be "interposed" between these components, or these components are "connected", "coupled" or "accessed" through another component.

As used herein, the term "and/or" includes any and all combinations of one or more of the associated listed items. Further, when describing embodiments of the present disclosure, the use of "may" means one or more embodiments of the present disclosure. When preceding a list of elements, the terms "one or more" and "at least one" modify the entire list of elements and do not modify the individual elements of the list.

The expression "A and/or B" throughout the specification means A, B, or A and B, unless otherwise differently stated. The expression "C to D" means C or more and D or less, unless otherwise specified.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," and the like may be used herein to describe various elements, components, regions, layers, and/or sections, these elements, components, regions, layers, and/or sections are not to be limited by these terms. These terms are used to distinguish one element, component, region, drawing layer, or section from another element, component, region, drawing layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It is to be understood that the spatially relative terms are intended to encompass different orientations of the device in use or operation in addition to the orientation depicted in the figures. For example, when the device in the drawing is turned over, elements described as "below" or "beneath" other elements would then be oriented "above" or "over" the other elements. Thus, the term "below" may encompass both an orientation of above and below.

The terms used in the present specification are intended to describe embodiments of the present disclosure and are not intended to limit the present disclosure.

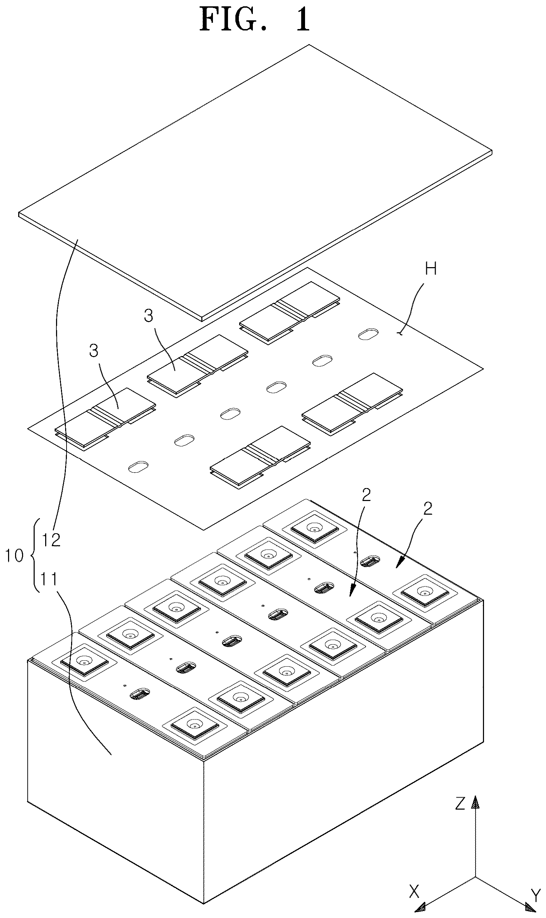

FIG. 1 is a perspective view schematically illustrating a configuration of a battery pack according to various embodiments. Referring to FIG. 1, the battery pack may include a housing 10, a secondary battery 2, and a bus bar 3.

The housing 10 generally forms an exterior of the battery pack, and may provide a space in which a plurality of secondary batteries 2 may be accommodated. The housing 10 may include a housing body 11 and a cover 12.

The housing body 11 may be formed to have a box shape, with an empty interior and an open surface. However, a cross-sectional shape of the housing body 11 is not limited to a quadrangular shape, as shown in FIG. 1, and may be changed in design to have any of various shapes, such as any of a polygonal shape, a circular shape, and an elliptical shape.

The cover 12 may be coupled to the housing body 11 and may close an internal space of the housing body 11. As an example, the cover 12 may be formed to have a generally plate shape and may be disposed to face the open surface of the housing body 11. The cover 12 may be fixed to the housing body 11 by any of various types of coupling methods, such as bolting, welding, fitting, and the like.

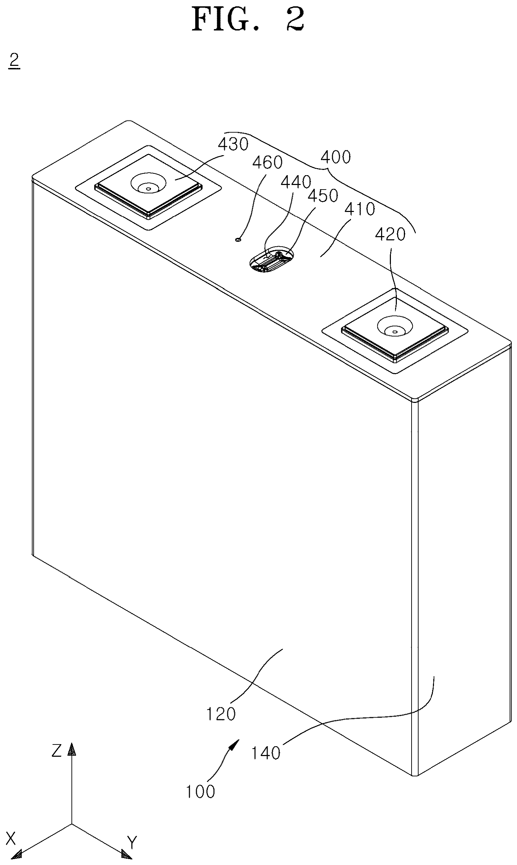

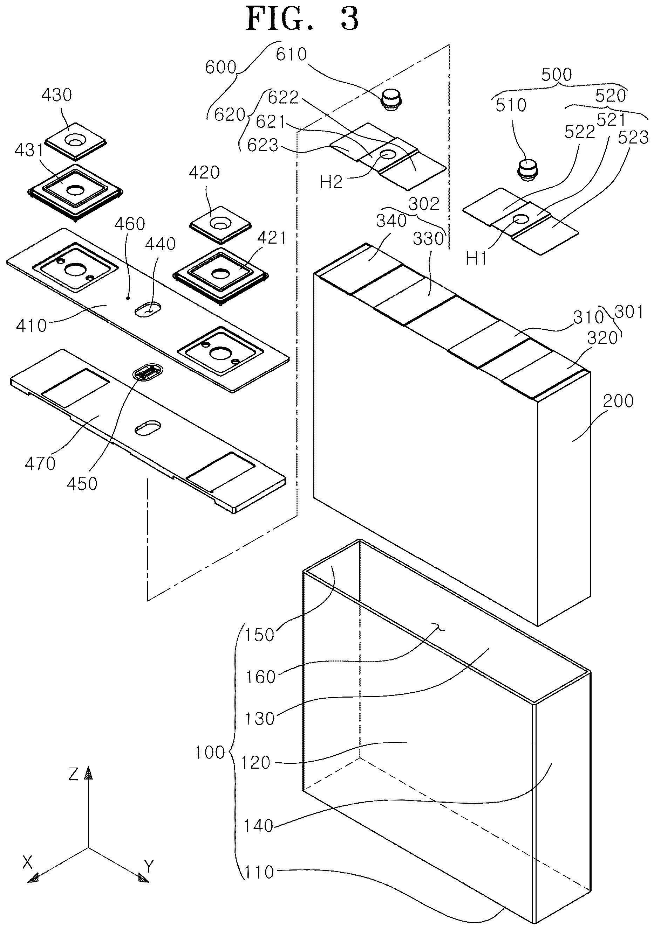

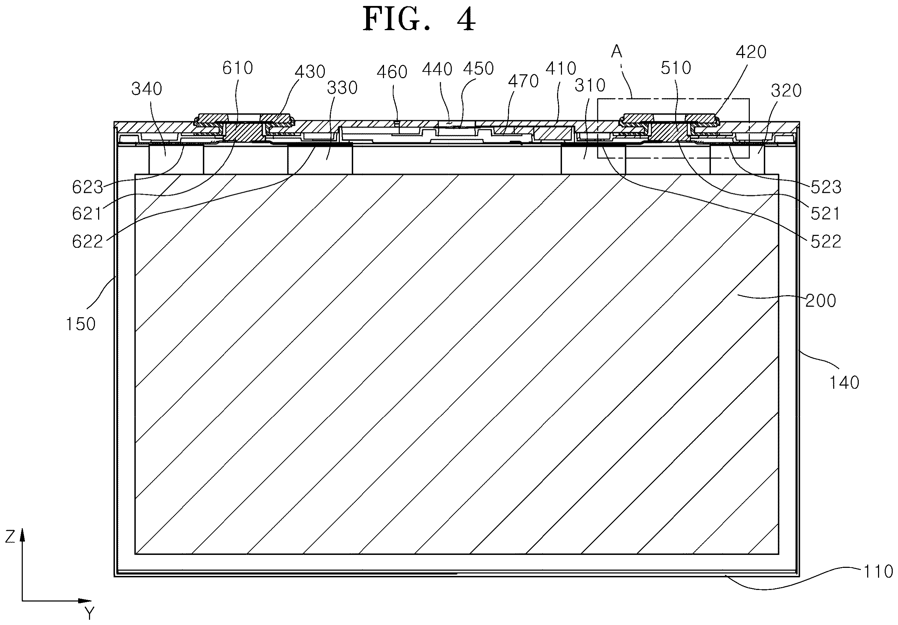

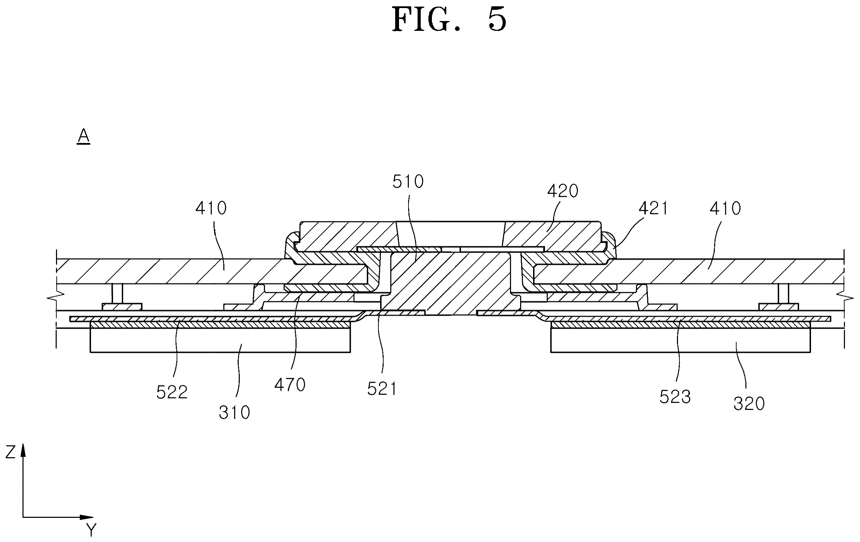

The secondary battery 2 may function as a unit structure, which stores and supplies power, in the battery pack. FIG. 2 is a perspective view schematically illustrating a configuration of the secondary battery according to various embodiments; FIG. 3 is an exploded perspective view schematically illustrating a configuration of the secondary battery of FIG. 2; FIG. 4 is a cross-sectional view schematically illustrating a configuration of the secondary battery of FIG. 2; and FIG. 5 is an enlarged view of a region "A" in the cross-sectional view of FIG. 4.

Herein, a case in which the secondary battery is a lithium-ion secondary battery having a prismatic shape will be described as an example. However, the present invention is not limited thereto, and the secondary battery may be a lithium polymer battery or a cylindrical battery, for example.

Referring to FIGS. 2 to 5, the secondary battery 2 includes a case 100, an electrode assembly 200, first and second tab members, or tabs, 301 and 302, a cap assembly 400, and first and second current collector assemblies 500 and 600.

The case 100 generally forms an exterior of the secondary battery 2 and may accommodate the electrode assembly 200. The case 100 may include a bottom portion 110, a front surface portion 120, a rear surface portion 130, a first side surface portion 140, and a second side surface portion 150.

The bottom portion 110 may form a lower exterior of the case 100 (based on FIG. 3). In various embodiments, the bottom portion 110 may have a rectangular plate shape. The bottom portion 110 may be seated on a bottom surface of the housing body 11.

The front surface portion 120, the rear surface portion 130, the first side surface portion 140, and the second side surface portion 150 may form a perimeter exterior of the case 100. The front surface portion 120, the rear surface portion 130, the first side surface portion 140, and the second side surface portion 150 may have the form of plates extending upward (based on FIG. 3) from edges of the bottom portion 110. The front surface portion 120, the rear surface portion 130, the first side surface portion 140, and the second side surface portion 150 may be disposed around (e.g., to surround) an upper space of the bottom portion 110. In various embodiments, the front surface portion 120, the rear surface portion 130, the first side surface portion 140, and the second side surface portion 150 may be disposed to form a rectangular cross-sectional shape.

The front surface portion 120 and the rear surface portion 130 may be disposed to face each other in a length direction of the housing 10. In various embodiments, the front surface portion 120 and the rear surface portion 130 may be disposed parallel to each other. In various embodiments, the front surface portion 120 and the rear surface portion 130 may have a same area.

The first side surface portion 140 and the second side surface portion 150 may be disposed to face each other in a width direction of the housing 10. In various embodiments, the first side surface portion 140 and the second side surface portion 150 may be disposed parallel to each other. In various embodiments, the first side surface portion 140 and the second side surface portion 150 may have a same area. The first side surface portion 140 and the second side surface portion 150 may each have a smaller area than each of the front surface portion 120 and the rear surface portion 130.

The case 100 may further include an opening 160. The opening 160 may refer to a space enclosed by upper end portions of the front surface portion 120, the rear surface portion 130, the first side surface portion 140, and the second side surface portion 150. The opening 160 interconnects the internal and external spaces of the case 100. In various embodiments, the case 100 may have a rectangular parallelepiped shape with an open upper side.

As described herein, a first direction may refer to a direction parallel to a Z-axis based on FIGS. 3 and 4 and a direction from the bottom portion 110 toward the opening 160. A second direction may refer to a direction parallel to a Y-axis based on FIGS. 3 and 4 and a direction from the first side surface portion 140 toward the second side surface portion 150. A third direction may refer to a direction parallel to an X-axis based on FIGS. 3 and 4 and a direction from the front surface portion 120 toward the rear surface portion 130.

The electrode assembly 200 may function as a unit structure for performing a power charging and discharging operation in the secondary battery. The electrode assembly 200 may be accommodated inside the case 100.

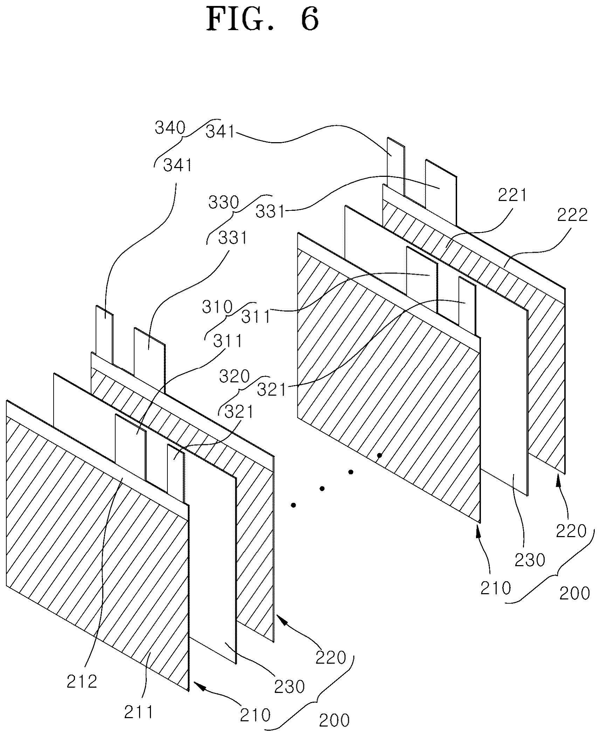

FIG. 6 is a view schematically illustrating a configuration of the electrode assembly according to various embodiments. Referring to FIG. 6, the electrode assembly 200 may include a first electrode 210, a second electrode 220, and a separator 230 disposed between the first electrode 210 and the second electrode 220. The first electrode 210, the separator 230, and the second electrode 220 may each be provided in plural.

Herein, a case in which the electrode assembly 200 has a stack form in which a plurality of first electrodes 210, a plurality of separators 230, and a plurality of second electrodes 220 are stacked sequentially in the third direction will be described as an example. However, the electrode assembly 200 is not limited to the form described above, and may be formed such that the first electrode 210, the separator 230, and the second electrode 220 are stacked and then wound around a winding axis in a clockwise or counterclockwise direction.

The first electrode 210 may function as one of a positive electrode or a negative electrode of the electrode assembly 200. Herein, a case in which the first electrode 210 is the positive electrode of the electrode assembly 200 will be described as an example. However, the first electrode 210 is not limited to thereto, and may function as the negative electrode of the electrode assembly 200.

The first electrode 210 may be formed in the form of a foil including a metal material, such as aluminum or an aluminum alloy. A type, size, and shape of the first electrode 210 are not particularly limited as long as the first electrode 210 has conductivity and does not cause chemical changes in the secondary battery. A cross-sectional shape of the first electrode 210 may be changed in design to have any of various shapes other than a rectangular shape, as shown in FIG. 6.

A plurality of first electrodes 210 may be provided. The plurality of first electrodes 210 may be arranged in the third direction between the front surface portion 120 and the rear surface portion 130 of the case 100. The number of first electrodes 210 may be varied in design according to a charging capacity or the like of the secondary battery 2.

A first active material layer 211 may be formed on at least a portion of the first electrode 210. The first active material layer 211 may be formed on both, or opposite, surfaces of the first electrode 210, or may be formed on only one surface of the first electrode 210. In various embodiments, the first electrode 210 functions as a positive electrode, and the first active material layer 211 may include a positive electrode active material.

The positive electrode active material may include a compound (lithiated intercalation compound) capable of reversibly intercalating and deintercalating lithium. In various embodiments, the positive electrode active material may include one or more types of composite oxides of lithium and a metal selected from cobalt, manganese, nickel, iron, and a combination thereof.

For example, the positive electrode active material may include at least one of lithium-iron-phosphate oxide (LiFePO₄, LFP), lithium-manganese-iron-phosphate oxide (LiMnFePO₄, LMFP), and lithium-nickel-cobalt-manganese oxide (LiNiₓCo_{y}Mn_{z}O₂, NCM). Here, conditions of 0<x<1, 0<y<1, 0<z<1, and x+y+z=1 may be satisfied. The positive electrode active material may include only one of LiFePO₄, LiMnFePO₄, and LiNiₓCo_{y}MnzO₂, and may also include two or all of LiFePO₄, LiMnFePO₄, and LiNiₓCo_{y}Mn_{z}O₂.

The first active material layer 211 may further include a positive electrode conductive material.

The positive electrode conductive material imparts conductivity to the first active material layer 211, and any suitable electrically conductive material that does not cause a chemical change in the battery may be used. Examples of the positive electrode conductive material may include a carbon-based material, such as natural graphite, artificial graphite, carbon black, acetylene black, Ketjen black, carbon fibers, carbon nanofibers, carbon nanotubes, and the like, a metal-based material in the form of a metal powder or metal fibers including copper, nickel, aluminum, silver, and the like, a conductive polymer, such as a polyphenylene derivative, or a mixture thereof.

The first active material layer 211 may further include a positive electrode binder.

The positive electrode binder adheres particles constituting the positive electrode active material to each other well, and adheres the positive electrode active material to the first electrode 210 well. Examples of the positive electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

If the aqueous binder is used as the positive electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. In various embodiments, Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The first electrode 210 may include a first uncoated portion 212 on which the first active material layer 211 is not formed. In various embodiments, the first uncoated portion 212 may be disposed in an upper end region of the first electrode 210, which is disposed to face the opening 160 from inside the case 100. However, the first uncoated portion 212 is not limited to such a form, and, in various embodiments, may be formed across an entire edge region of the first electrode 210.

The second electrode 220 can function as the other one of the positive electrode and the negative electrode of the electrode assembly 200. Herein, a case in which the second electrode 220 is the negative electrode of the electrode assembly 200 will be described as an example. However, the second electrode 220 is not limited thereto, and may function as the positive electrode of the electrode assembly 200.

A plurality of second electrodes 220 may be provided. The plurality of second electrodes 220 may be arranged in the third direction between the front surface portion 120 and the rear surface portion 130 of the case 100. The first electrode 210 and the second electrode 220 may be alternately disposed in the third direction. The second electrode 220 may be disposed to be spaced apart from the first electrode 210 by a distance (e.g., a predetermined distance) in the third direction.

The second electrode 220 may be formed in the form of a foil including a metal material, such as copper, a copper alloy, nickel, or a nickel alloy. A type, size, and shape of the second electrode 220 are not particularly limited as long as the second electrode 220 has conductivity and does not cause chemical changes in the secondary battery. A cross-sectional shape of the second electrode 220 may be changed in design to have any of various shapes other than a rectangular shape, as shown in FIG. 6.

A second active material layer 221 may be formed on at least a portion of the second electrode 220. The second active material layer 221 may be formed on both, or opposite, surfaces of the second electrode 220, or may be formed on only one surface of the second electrode 220.

In various embodiments, the second electrode 220 functions as the negative electrode, and the second active material layer 221 may include a negative electrode active material.

The negative electrode active material may be a material that reversibly intercalates/deintercalates lithium ions, a lithium metal, a lithium metal alloy, a material capable of doping and dedoping lithium, or a transition metal oxide.

The material capable of reversible intercalation and deintercalation of lithium ions is a carbon-based negative electrode active material, and may include, for example, crystalline carbon, amorphous carbon, or a combination thereof. Examples of the crystalline carbon may include graphite, such as amorphous, plate-shaped, flaky, spherical, or fibrous natural graphite or artificial graphite. Examples of the amorphous carbon may include soft carbon or hard carbon, a mesophase pitch carbide product, calcined coke, and the like.

In various embodiments, the lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

In various embodiments, a Si-based negative electrode active material or a Sn-based negative electrode active material may be used as the material capable of doping and dedoping lithium. The Si-based negative electrode active material may include silicon, a silicon-carbon composite, SiOₓ (0<x≤2), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to various embodiments, the silicon-carbon composite may be in the form of silicon particles and amorphous carbon coated on the surface of the silicon particles. For example, the silicon-carbon composite may include a secondary particle (core) in which silicon primary particles are agglomerated and an amorphous carbon coating layer (shell) located on the surface of the secondary particle. The amorphous carbon may be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used by being mixed with a carbon-based negative electrode active material.

The second active material layer 221 may further include a negative electrode conductive material and a negative electrode binder.

The negative electrode conductive material imparts conductivity to the second active material layer 221, and any suitable electrically conductive material that does not cause a chemical change in the battery may be used. Examples of the negative electrode conductive material may include a carbon-based material, such as natural graphite, artificial graphite, carbon black, acetylene black, Ketjen black, carbon fibers, carbon nanofibers, carbon nanotubes, and the like, a metal-based material in the form of a metal powder or metal fibers including copper, nickel, aluminum, silver, and the like, a conductive polymer, such as a polyphenylene derivative, or a mixture thereof.

The negative electrode binder adheres particles constituting the negative electrode active material to each other well, and adheres the negative electrode active material to the second electrode 220 well.

Examples of the negative electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

If the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. In various embodiments, Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The second electrode 220 may include a second uncoated portion 222 on which the second active material layer 221 is not formed. In various embodiments, the second uncoated portion 222 may be disposed in an upper end region of the second electrode 220 disposed to face the opening 160 from inside the case 100. However, the second uncoated portion 222 is not limited to such a form, and, in various embodiments, may be formed across an entire edge region of the second electrode 220.

The separator 230 may be disposed between the first electrode 210 and the second electrode 220. The separator 230 may prevent or substantially prevent a short circuit of the first electrode 210 and the second electrode 220 while allowing movement of lithium ions between the first electrode 210 and the second electrode 220.

In various embodiments, the separator 230 may be disposed to cover an entire surface region of the electrode assembly 200. Accordingly, the separator 230 may prevent or substantially prevent the first electrode 210 and the second electrode 220 from being directly exposed to the outside of the electrode assembly 200.

In various embodiments, the separator 230 may be made of polyethylene, polypropylene, polyvinylidene fluoride, or a multilayer film of two or more layers thereof, and may be made of a mixed multilayer film, such as a polyethylene/polypropylene double-layered separator, a polyethylene/polypropylene/polyethylene three-layered separator, and a polypropylene/polyethylene/polypropylene three-layered separator.

The separator 230 may include a porous substrate, and a coating layer including an organic material, an inorganic material, or a combination thereof located on one surface or both, or opposite, surfaces of the porous substrate.

The porous substrate may be a polymer film formed of a polymer, or a copolymer or a mixture of two or more selected from polyolefins, such as polyethylene, polypropylene, and the like, polyesters, such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, and polytetrafluoroethylene (e.g., Teflon).

The organic material may include a polyvinylidene fluoride-based polymer or a (meth)acrylic-based polymer.

In various embodiments, the inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present invention is not limited thereto.

The organic and inorganic materials may be present by being mixed in one coating layer or may be present in a form in which a coating layer including organic materials and a coating layer including inorganic materials are stacked.

The first tab member 301 is connected to the first electrode 210, and may protrude outward from the electrode assembly 200. In various embodiments, the first electrode 210 functions as the positive electrode, and the first tab member 301 may function as a positive electrode tab of the secondary battery 2. However, the present invention is not limited thereto, and if the first electrode 210 is a negative electrode, the first tab member 301 may function as a negative electrode tab of the secondary battery 2.

The first tab member 301 may extend in the first direction from the electrode assembly 200. That is, the first tab member 301 may extend toward the opening 160 from inside the case 100.

The first tab member 301 may include one or a plurality of tab members. As an example, the first tab member 301 may include a first inner tab member 310 and a first outer tab member 320. However, the present invention is not limited thereto, and the first tab member 301 may include one tab member or may include three or more tab members.

The first inner tab member 310 and the first outer tab member 320 may be spaced apart from each other in the second direction. As an example, the first outer tab member 320 and the first inner tab member 310 may be disposed sequentially in the second direction. That is, the first outer tab member 320 may be disposed at a position spaced apart from the first inner tab member 310 by a distance (e.g., a predetermined distance) in a direction opposite to the second direction. The first outer tab member 320 may be disposed at a position relatively closer to the first side surface portion 140 than the first inner tab member 310.

The first inner tab member 310 may include a first inner tab 311. The first inner tab 311 may have a form of a foil extending in the first direction from the first uncoated portion 212 of the first electrode 210. In various embodiments, the first inner tab 311 may have a rectangular or substantially rectangular shape. However, a shape of the first inner tab 311 is not limited thereto, and may be variously changed.

In various embodiments, the first inner tab 311 may be integrally formed with the first electrode 210. For example, the first inner tab 311 may be a remaining region of the first uncoated portion 212 after a partial region of the first uncoated portion 212 has been cut or removed through a process, such as notching. In another embodiment, the first inner tab 311 may be fabricated separately from the first electrode 210 and then connected to the first uncoated portion 212 by welding or the like. In various embodiments, a material of the first inner tab 311 may be the same as a material of the first electrode 210.

In various embodiments, a plurality of first inner tabs 311 may be provided. The number of first inner tabs 311 may be the same as a number of the first electrodes 210. The first inner tabs 311 may individually extend from the first uncoated portions 212 of the different first electrodes 210, respectively. The adjacent first inner tabs 311 may be disposed to face each other in the third direction. The adjacent first inner tabs 311 may be disposed parallel to each other. The first inner tab member 310 may be an assembly of the plurality of first inner tabs 311 stacked in the third direction. The adjacent first inner tabs 311 may be in contact with each other and may be spaced apart from each other by a thickness of the separator 230.

The first outer tab member 320 may include a first outer tab 321. The first outer tab 321 may have a form of a foil extending in the first direction from the first uncoated portion 212 of the first electrode 210. The first outer tab 321 may be disposed at a position spaced apart from the first inner tab 311 by a distance (e.g., a predetermined distance) in a direction opposite to the second direction. In various embodiments, the first outer tab 321 may have a rectangular or substantially rectangular shape. However, a shape of the first outer tab 321 is not limited thereto, and may be variously changed.

In various embodiments, the first outer tab 321 may be integrally formed with the first electrode 210. For example, the first outer tab 321 may be a region that excludes the first inner tab 311 from a remaining region of the first uncoated portion 212 after a partial region of the first uncoated portion 212 has been cut or removed through a process, such as notching. In another embodiment, the first outer tab 321 may be fabricated separately from the first electrode 210 and then connected to the first uncoated portion 212 by welding or the like. In various embodiments, a material of the first outer tab 321 may be the same as a material of the first electrode 210.

In various embodiments, a plurality of first outer tabs 321 may be provided. A number of first outer tabs 321 may be the same as a number of first electrodes 210. The first outer tabs 321 may individually extend from the first uncoated portions 212 of the different first electrodes 210, respectively. The adjacent first outer tabs 321 may be disposed to face each other in the third direction. The adjacent first outer tabs 321 may be disposed parallel to each other. Accordingly, the first outer tab member 320 may be an assembly of the plurality of first outer tabs 321 stacked in the third direction. The adjacent first outer tabs 321 may be in contact with each other and may be spaced apart from each other by the thickness of the separator 230.

The secondary battery 2 may further include a second tab member 302. The second tab member 302 is connected to the second electrode 220, and may protrude outward from the electrode assembly 200. In various embodiments, the second electrode 220 functions as the negative electrode, and the second tab member 302 may function as a negative electrode tab of the secondary battery 2. However, the second tab member 302 is not limited thereto, and may function as a positive electrode tab of the secondary battery 2 if the second electrode 220 is the positive electrode.

The second tab member 302 may extend in the first direction from the electrode assembly 200. That is, the second tab member 302 may extend toward the opening 160 from inside the case 100.

The second tab member 302 may include one or a plurality of tab members. As an example, the second tab member 302 may include a second inner tab member 330 and a second outer tab member 340. However, the present invention is not limited thereto, and the second tab member 302 may include one or three or more tab members.

The second inner tab member 330 and the second outer tab member 340 may be spaced apart from each other in the second direction. As an example, the second inner tab member 330 and the second outer tab member 340 may be disposed sequentially in the second direction. That is, the second outer tab member 340 may be disposed at a position spaced apart from the second inner tab member 330 by a distance (e.g., a predetermined distance) in the second direction. The second outer tab member 340 may be disposed at a position relatively closer to the second side surface portion 150 than the second inner tab member 330.

The second inner tab member 330 may include a second inner tab 331. The second inner tab 331 may have a form of a foil extending in the first direction from the second uncoated portion 222 of the second electrode 220. In various embodiments, the second inner tab 331 may have a rectangular or substantially rectangular shape. However, a shape of the second inner tab 331 is not limited thereto, and may be variously changed.

In various embodiments, the second inner tab 331 may be integrally formed with the second electrode 220. For example, the second inner tab 331 may be a remaining region of the second uncoated portion 222 after a partial region of the second uncoated portion 222 has been cut or removed through a process, such as notching. In another embodiment, the second inner tab 331 may be fabricated separately from the second electrode 220 and then connected to the second uncoated portion 222 by welding or the like. In various embodiments, a material of the second inner tab 331 may be the same as a material of the second electrode 220.

In various embodiments, a plurality of second inner tabs 331 may be provided. A number of second inner tabs 331 may be the same as a number of second electrodes 220. The second inner tabs 331 may individually extend from the second uncoated portions 222 of the different second electrodes 220, respectively. The adjacent second inner tabs 331 may be disposed to face each other in the third direction. The adjacent second inner tabs 331 may be disposed parallel to each other. Accordingly, the second inner tab member 330 may be an assembly of the plurality of second inner tabs 331 stacked in the third direction. The adjacent second inner tabs 331 may be in contact with each other and may be spaced apart from each other by the thickness of the separator 230.

The second outer tab member 340 may include a second outer tab 341. The second outer tab 341 may have a form of a foil extending in the first direction from the second uncoated portion 222 of the second electrode 220. The second outer tab 341 may be disposed at a position spaced apart from the second inner tab 331 by a distance (e.g., a predetermined distance) in the second direction. In various embodiments, the second outer tab 341 may have a rectangular or substantially rectangular shape. However, a shape of the second outer tab 341 is not limited thereto, and may be variously changed.

In various embodiments, the second outer tab 341 may be integrally formed with the second electrode 220. For example, the second outer tab 341 may be a region that excludes the second inner tab 331 from a remaining region of the second outer tab 341 after a partial region of the second uncoated portion 222 has been cut or removed through a process, such as notching. In another embodiment, the second outer tab 341 may be fabricated separately from the second electrode 220 and then connected to the second uncoated portion 222 by welding or the like. In various embodiments, a material of the second outer tab 341 may be the same as a material of the second electrode 220.

In various embodiments, a plurality of second outer tabs 341 may be provided. A number of second outer tabs 341 may be the same as a number of second electrodes 220. The second outer tabs 341 may individually extend from the second uncoated portions 222 of the different second electrodes 220, respectively. The adjacent second outer tabs 341 may be disposed to face each other in the third direction. The adjacent second outer tabs 341 may be disposed parallel to each other. Accordingly, the second outer tab member 340 may be an assembly of the plurality of second outer tabs 341 stacked in the third direction. The adjacent second outer tabs 341 may be in contact with each other and may be spaced apart from each other by the thickness of the separator 230.

Referring to FIGS. 2 to 5, the cap assembly 400 may be coupled to the case 100, and may seal the case 100. The cap assembly 400 may be disposed to face the electrode assembly 200 in the first direction. The cap assembly 400 may include a cap plate 410, a first terminal 420, and a second terminal 430.

The cap plate 410 generally forms an exterior of the cap assembly 400, and may support (e.g., entirely support) the first terminal 420 and the second terminal 430. In various embodiments, the cap plate 410 may be formed to have a shape of a flat plate. The cap plate 410 may be disposed in the opening 160 of the case 100. The cap plate 410 may be disposed to face the electrode assembly 200 in the first direction. That is, the cap plate 410 may be disposed at a position spaced apart from the electrode assembly 200 by a distance (e.g., a predetermined distance) in the first direction. In various embodiments, the cap plate 410 may be disposed parallel to the bottom portion 110 of the case 100.

The cap plate 410 may be seated on an upper end portion of the case 100, and, in various embodiments, on upper end portions of the front surface portion 120, the rear surface portion 130, the first side surface portion 140, and the second side surface portion 150. The cap plate 410 may be coupled to the case 100 by any of various types of coupling methods, such as welding, bolting, fitting coupling, and the like.

In various embodiments, the first terminal 420 may be inserted in the cap plate 410. The first terminal 420 may be electrically connected to the first electrode 210. In various embodiments, the first electrode 210 functions as the positive electrode, and the first terminal 420 may be a positive electrode terminal of the secondary battery 2. In various embodiments, an upper end portion of the first terminal 420 may protrude outward from the cap plate 410 in the first direction.

In FIG. 3, the first terminal 420 is illustrated as having a rectangular planar shape as an example, but the planar shape of the first terminal 420 is not limited thereto, and may have any of various shapes, such as a circular, elliptical, or polygonal shape. The first terminal 420 may be formed of an electrically conductive material, such as aluminum, nickel, copper, or the like.

A first gasket 421 may be installed between the cap plate 410 and the first terminal 420. The first gasket 421 may electrically insulate the cap plate 410 from the first terminal 420, and may prevent or substantially prevent moisture or foreign substances from entering between the cap plate 410 and the first terminal 420.

The first gasket 421 may be formed of an insulating material, such as polyethylene (PE), polypropylene (PP), polyethylene terephthalate (PET), rubber, or the like. The first gasket 421 may be fixed between the cap plate 410 and the first terminal 420 by press-fitting, injection molding, adhesion, or the like.

In various embodiments, the second terminal 430 may be inserted in the cap plate 410. The second terminal 430 may be electrically connected to the second electrode 220. In various embodiments, the second electrode 220 functions as the positive electrode, and the second terminal 430 may be a negative electrode terminal of the secondary battery 2. In various embodiments, an upper end portion of the second terminal 430 may protrude outward from the cap plate 410 in the first direction.

In FIG. 3, the second terminal 430 is illustrated as having a rectangular planar shape as an example, but the planar shape of the second terminal 430 is not limited thereto, and may have any of various shapes, such as a circular, elliptical, or polygonal shape. The second terminal 430 may be formed of an electrically conductive material, such as aluminum, nickel, copper, or the like.

A second gasket 422 may be installed between the cap plate 410 and the second terminal 430. The second gasket 422 may electrically insulate the cap plate 410 from the second terminal 430 and prevent or substantially prevent moisture or foreign substances from entering between the cap plate 410 and the second terminal 430.

The second gasket 422 may be formed of an insulating material, such as polyethylene (PE), polypropylene (PP), polyethylene terephthalate (PET), rubber, or the like. The second gasket 422 may be fixed between the cap plate 410 and the second terminal 430 by press-fitting, injection molding, adhesion, or the like.

The cap assembly 400 may further include a vent hole 440 and a vent 450. The vent hole 440 may be formed to have a shape of a hole vertically passing through both, or opposite, surfaces of the cap plate 410 in the first direction. The vent hole 440 may provide a path for flames, gases, smoke, or the like formed inside the case 100 to be discharged to the outside of the case 100 in the event of a thermal runaway of the secondary battery 2 due to overcurrent or the like. In various embodiments, the vent hole 440 may be disposed between the first terminal 420 and the second terminal 430. A cross-sectional shape of the vent hole 440 may have any of various shapes, such as an elliptical shape, a circular shape, and a polygonal shape.

The vent 450 is installed in the vent hole 440, and may open and close in response to changes in internal pressure of the case 100. That is, the vent 450 may close the vent hole 440 during a normal operation of the secondary battery 2 to prevent or substantially prevent an electrolyte or the like inside the case 100 from leaking out of the case 100, or to block moisture, foreign substances, or the like from entering the case 100. The vent 450 may open the vent hole 440 during thermal runaway of the secondary battery 2 to guide flames, gases, smoke, or the like formed inside the case 100 to be discharged to the outside of the case 100.

The vent 450 may be formed to have a generally plate shape. The vent 450 may be fixed to the cap plate 410 by any of various types of coupling methods, such as welding, bolting, fitting, and the like. The vent 450 may be disposed inside the vent hole 440, or may be disposed on an upper or lower side of the cap plate 410 to face the vent hole 440 in the first direction.

In various embodiments, a thickness of the vent 450 in the first direction may be less than a thickness of the cap plate 410. Accordingly, the vent 450 may easily rupture or fracture if the internal pressure of the case 100 rises. In various embodiments, the vent 450 may include a notch formed to be recessed inward of the vent 450 to preferentially fracture if the internal pressure of the case 100 rises.

The cap assembly 400 may further include an electrolyte injection port 460 which is formed through the cap plate 410 and in which a sealing cap may be installed. The electrolyte injection port 460 may be disposed to be spaced apart from the vent hole 440 by a distance (e.g., a predetermined distance) in the second direction or in the direction opposite to the second direction. In various embodiments, the electrolyte injection port 460 may be disposed between the first terminal 420 and the second terminal 430.

The cap assembly 400 may further include an insulating plate 470. The insulating plate 470 may be disposed between the cap plate 410 and the electrode assembly 200. The insulating plate 470 may insulate the cap plate 410 from the electrode assembly 200 by preventing or substantially preventing direct contact therebetween. The insulating plate 470 may fix the position of the electrode assembly 200 inside the case 100. The insulating plate 470 may prevent or substantially prevent the electrode assembly 200 from breaking when the cap plate 410 is deformed inwardly of the case 100, such as by an external impact.

The insulating plate 470 may be disposed inside the case 100 to face the electrode assembly 200 in the first direction. That is, the electrode assembly 200, the insulating plate 470, and the cap plate 410 may be sequentially disposed in the first direction. In various embodiments, the insulating plate 470 may be fixed to an inner side surface of the case 100 by any of various types of coupling methods, such as fitting, welding, bolting, adhesion, and the like. The insulating plate 470 may be in contact with a surface of the electrode assembly 200 from which the first tab member 301 and the second tab member 302 are extended. The insulating plate 470 may be formed of an insulating material, such as polyethylene (PE), polypropylene (PP), polyethylene terephthalate (PET), rubber, or the like.

The first current collector assembly 500 may be disposed between the electrode assembly 200 and the cap assembly 400. The first current collector assembly 500 may be connected to the first terminal 420 and the first tab member 301. The first current collector assembly 500 may electrically connect the first terminal 420 and the first tab member 301. The first current collector assembly 500 may be formed of an electrically conductive material. In various embodiments, the first current collector assembly 500 may be formed of a same material as the first terminal 420. The first current collector assembly 500 may be implemented in various ways depending on a type of the secondary battery, a shape or arrangement position of the first tab member 301, a shape or arrangement position of the first terminal 420, and the like.

According to an aspect of the present embodiment, the first current collector assembly 500 may include a first current collector 510 and a first current collector plate 520, as shown in FIG. 3. In various embodiments, the first current collector 510 and the first current collector plate 520 are manufactured as separate members and may be joined by a method, such as welding.

In various embodiments, the first current collector 510 and the first current collector plate 520 may be assembled and joined through a male-female fitting. In this case, a protrusion may be formed on the first current collector 510, and a recess or hole may be formed in the first current collector plate 520. In another embodiment, a groove may be formed in the first current collector 510, and a protrusion may be formed on the first current collector plate 520.

In various embodiments, the first current collector 510 and the first current collector plate 520 may joined to each other through butt welding while being assembled and coupled. Accordingly, a welding strength can be improved compared to joining through lap welding. As a result, a bonding strength between the first current collector 510 and the first current collector plate 520 may be improved.

The first current collector 510 may protrude from the first current collector plate 520 and may be connected to the first terminal 420. The first current collector 510 is coupled to the first current collector plate 520 and protrudes in the first direction from an upper surface (first surface) of the first current collector plate 520, and the protruding portion, in various embodiments, may have a generally cylindrical shape. However, the present invention is not limited thereto, and the protruding portion may have a polygonal column shape, such as an elliptical column, a rectangular column, or a hexagonal column, for example. A shape of each of the first current collector 510 and the first current collector plate 520, as well as their coupling structure, will be described in further detail below.

An upper end surface of the first current collector 510 may be in contact with a lower surface of the first terminal 420. In various embodiments, the first current collector 510 may vertically pass through the insulating plate 470 in the first direction. In various embodiments, the upper end surface of the first current collector 510 may be joined to the lower surface of the first terminal 420 by laser welding. A planar shape of the first current collector 510 may be varied, such as an oval shape, a polygonal shape, and the like, in addition to a circular shape, as illustrated in FIG. 3.

The first current collector plate 520 may be connected to the first current collector 510 and to the first tab member 301. In various embodiments, the first current collector plate 520 may include a first center plate (first sub-plate) 521, and a first inner plate (second sub-plate) 522 and a first outer plate (second sub-plate) 523 extending from both, or opposite, sides of the first center plate. In another embodiment, the first current collector plate 520 may include the first sub-plate 521 and only one second sub-plate 522 or 523 extending from one side of the first sub-plate 521.

The first center plate 521 forms a central portion of an exterior of the first current collector plate 520, and may be coupled and connected to the first current collector 510. The first center plate 521 may be disposed between the first current collector 510 and the electrode assembly 200. The first center plate 521 may fix the first current collector 510 by coming into contact with a lower surface of the first current collector 510 through an upper surface thereof. The first center plate 521 may fix the first current collector 510 by any of various types of coupling methods, such as welding, bolting, or adhesion. The first center plate 521 may have both, or opposite, side end portions extending from a coupling surface of the first current collector 510 toward the electrode assembly 200. In various embodiments, both, or opposite, side end portions of the first center plate 521 may pass through the insulating plate 470 and may be disposed below the insulating plate 470.

According to various embodiments, a first hole H1 with a certain (e.g., predetermined) size and shape may be formed in the first center plate 521. The first hole H1 may be located in a portion to which the first current collector 510 is coupled. The first hole H1 may have a structure that allows a coupling protrusion formed on a lower end surface of the first current collector 510 to be inserted and coupled. Accordingly, a size and shape of the first hole H1 may correspond to a size and shape of the coupling protrusion of the first current collector 510. However, a planar shape of the first hole H1 is not necessarily limited to a circular shape and may have any of various shapes, such as an elliptical or quadrangular shape.

The first inner plate 522 may extend in the second direction from an end portion of the first center plate 521. The first inner plate 522 may be disposed to face the first inner tab member 310 in the first direction. The first inner plate 522 may be in contact with an end surface of the first inner tab member 310. In various embodiments, the first inner tab member 310 and the first inner plate 522 may be joined to each other by laser welding.

The first outer plate 523 may extend in a direction opposite to the second direction from another end portion of the first center plate 521. The first outer plate 523 may be disposed to face the first outer tab member 320 in the first direction. The first outer plate 523 may be in contact with an end surface of the first outer tab member 320. In various embodiments, the first outer tab member 320 and the first outer plate 523 may be joined to each other by laser welding.

According to various embodiments, the first inner plate 522 and the first outer plate 523 may not lie on a same plane as the first center plate 521 but may form parallel planes at different heights. In various embodiments, each of the first inner plate 522 and the first outer plate 523 may be bent twice at a boundary with the first center plate 521 so as to be located closer to the first tab member 301 side than the first center plate 521. As a result, the first inner plate 522 and the first outer plate 523 may protrude further toward a lower surface of the first current collector plate 520 than the first center plate 521.

The secondary battery 2 may further include the second current collector assembly 600. The second current collector assembly 600 may be disposed between the electrode assembly 200 and the cap assembly 400. The second current collector assembly 600 may be connected to the second terminal 430 and the second tab member 302. The second current collector assembly 600 may electrically connect the second terminal 430 and the second tab member 302. The second current collector assembly 600 may be formed of an electrically conductive material. In various embodiments, the second current collector assembly 600 may be formed of a same material as the second terminal 430. The second current collector assembly 600 may be implemented in various ways depending on the type of the secondary battery, a shape or arrangement position of the second tab member 302, and a shape or arrangement position of the second terminal 430.

According to an aspect of the present embodiment, the second current collector assembly 600 may include a second current collector 610 and a second current collector plate 620, as shown in FIG. 3. In various embodiments, the second current collector 610 and the second current collector plate 620 are manufactured as separate members and may be joined by a method such as welding.

In various embodiments, the second current collector 610 and the second current collector plate 620 may be assembled and joined through a male-female fitting. In various embodiments, a protrusion may be formed on the second current collector 610, and a recess or hole may be formed in the second current collector plate 620. In another embodiment, a groove may be formed in the second current collector 610, and a protrusion may be formed on the second current collector plate 620.

In various embodiments, the second current collector 610 and the second current collector plate 620 may be joined to each other through butt welding while being assembled and coupled. Accordingly, a welding strength can be improved compared to joining through lap welding. As a result, a bonding strength between the second current collector 610 and the second current collector plate 620 may be improved.

The second current collector 610 may protrude from the second current collector plate 620 and may be connected to the second terminal 430. The second current collector 610 is coupled to the second current collector plate 620 and protrudes in the first direction, and, in various embodiments, the protruding portion may have a generally cylindrical shape. However, the present invention is not limited thereto, and, in various embodiments, the protruding portion may have a polygonal column shape, such as an elliptical column, a rectangular column, or a hexagonal column. A shape of each of the second current collector 610 and the second current collector plate 620, as well as their coupling structure, will be described in further detail later.

An upper end surface of the second current collector 610 may be in contact with a lower surface of the second terminal 430. In various embodiments, the second current collector 610 may vertically pass through the insulating plate 470 in the first direction. In various embodiments, the upper end surface of the second current collector 610 may be joined to the lower surface of the second terminal 430 by laser welding. However, a planar shape of the second current collector 610 may be variously changed, such as an oval shape, a polygonal shape, and the like, in addition to a circular shape, as illustrated in FIG. 3.

The second current collector plate 620 may be connected to the second current collector 610 and the second tab member 302. In various embodiments, the second current collector plate 620 may include a second center plate (first sub-plate) 621, a second inner plate (second sub-plate) 622, and a second outer plate (second sub-plate) 623. In another embodiment, the second current collector plate 620 may include the first sub-plate 621 and only one second sub-plate 622 or 623 extending from one side of the first sub-plate 621.

The second center plate 621 forms a central portion of the exterior of the second current collector plate 620, and may be coupled and connected to the second current collector 610. The second center plate 621 may be disposed between the second current collector 610 and the electrode assembly 200. The second center plate 621 may fix the second current collector 610 by coming into contact with a lower surface of the second current collector 610 through an upper surface thereof. The second center plate 621 may fix the second current collector 610 by any of various types of coupling methods, such as welding, bolting, or adhesion. The second center plate 621 may have both, or opposite, side end portions extending from a coupling surface of the second current collector 610 toward the electrode assembly 200. In various embodiments, the side end portions of the second center plate 621 may pass through the insulating plate 470 and may be disposed below the insulating plate 470.

A second hole H2 with a certain (e.g., predetermined) size and shape may be formed in the second center plate 621. The second hole H2 may be located in a portion to which the second current collector 610 is coupled. The second hole H2 may have a structure that allows a coupling protrusion formed on a lower surface of the second current collector 610 to be inserted and coupled. In various embodiments, the size and shape of the second hole H2 may correspond to the size and shape of the coupling protrusion on the lower surface of second current collector 610. However, a shape of the second hole H2 is not necessarily limited to a circular shape and may have shapes such as an elliptical or quadrangular shape.

The second inner plate 622 may extend in the second direction from an end portion of the second center plate 621. The second inner plate 622 may be disposed to face the second inner tab member 330 in the first direction. The second inner plate 622 may be in contact with an end surface of the second inner tab member 330. In various embodiments, the second inner tab member 330 and the second inner plate 622 may be joined to each other by laser welding.

The second outer plate 623 may extend in a direction opposite to the second direction from another end portion of the second center plate 621. The second outer plate 623 may be disposed to face the second outer tab member 340 in the first direction. The second outer plate 623 may be in contact with an end surface of the second outer tab member 340. In various embodiments, the second outer tab member 340 and the second outer plate 623 may be joined to each other by laser welding.

According to various embodiments, the second inner plate 622 and the second outer plate 623 may not lie on a same plane as the second center plate 621 but may form parallel planes at different heights. In various embodiments, each of the second inner plate 622 and the second outer plate 623 may be bent twice at a boundary with the second center plate 621 so as to be located closer to the second tab member 302 side than the second center plate 621. As a result, the second inner plate 622 and the second outer plate 623 may protrude further toward a lower surface of the second current collector plate 620 than the second center plate 621.

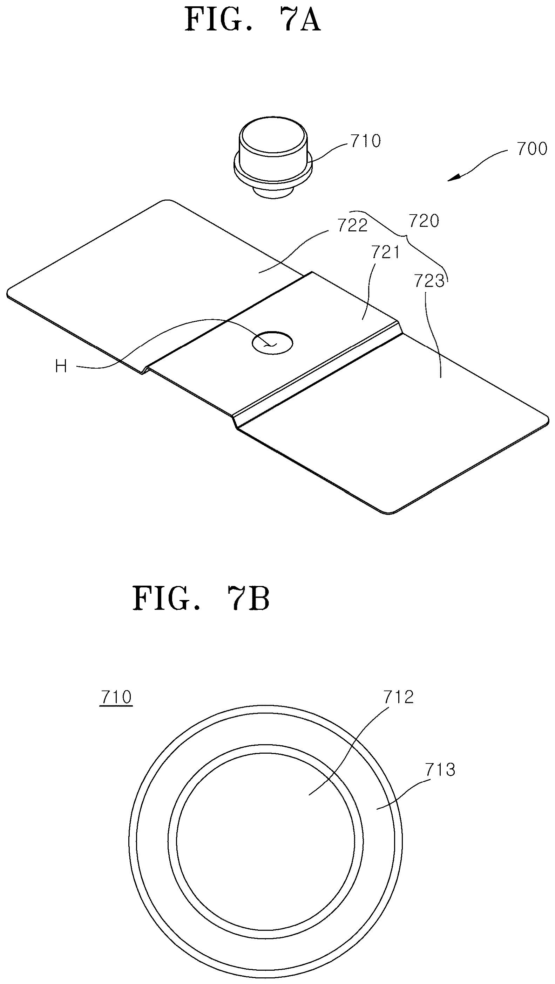

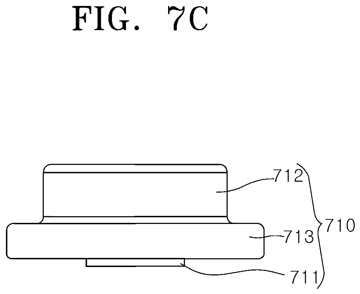

FIG. 7A is an exploded perspective view schematically illustrating a configuration of a current collector assembly according to various embodiments; and FIGS. 7B and 7C are a top view and a front view, respectively, illustrating a configuration of a current collector in the current collector assembly of FIG. 7A.

Referring to FIGS. 7A to 7C, a current collector assembly 700 includes a current collector 710 and a current collector plate 720. The current collector 710 may correspond to the first current collector 510 or the second current collector 610 shown in FIG. 3, and the current collector plate 720 may correspond to the first current collector plate 520 or the second current collector plate 620 shown in FIG. 3.

The current collector 710 may include a coupling protrusion 711, a current collector body 712, and a flange 713. In various embodiments, the coupling protrusion 711, the current collector body 712, and the flange 713 may each be manufactured as a separate member and then joined together by a method such as welding, or may all be integrally formed. However, a planar shape of each of the coupling protrusion 711, the current collector body 712, and the flange 713 is not necessarily a circular shape and may have a shape such as an elliptical or polygonal shape.

In various embodiments, the coupling protrusion 711, the current collector body 712, and the flange 713 may be manufactured by forging a round bar material with a constant diameter. For example, a single round bar material with a same diameter as the flange 713 may be processed to form the current collector body 712 and the coupling protrusion 711 by forging each of upper and lower portions of the flange 713. Thus, in various embodiments, the current collector 710 is formed by compressing a round bar material, and no scrap is generated. In various embodiments, the coupling protrusion 711, the current collector body 712, and the flange 713 form an integrated structure, thereby exhibiting excellent rigidity and eliminating the need for additional processes such as welding.

The coupling protrusion 711 may be a portion protruding from a surface, for example, a lower surface, of the flange 713. The coupling protrusion 711 may have a shape and size that allow the coupling protrusion 711 to fit into and couple with the coupling hole H formed in the current collector plate 720. For example, if the coupling hole H has a circular shape, the coupling protrusion 711 may have a circular planar shape and may be formed as a cylinder with a certain (e.g., predetermined) height. In various embodiments, the height of the coupling protrusion 711, i.e., the height of the portion protruding from the lower surface of the flange 713, may be equal (equal or substantially equal) to or less than a thickness of the current collector plate 720.

The current collector body 712 may be a portion protruding from another surface, for example, an upper surface of the flange 713. The current collector body 712 may have a generally columnar shape. In various embodiments, the planar shape of the current collector body 712 may be a circular shape, but is not limited thereto, and may have an elliptical or polygonal shape. For example, the coupling protrusion 711 may have a circular planar shape with a certain (e.g., predetermined) diameter (first diameter) and a cylindrical shape with a certain (e.g., predetermined) height (first height). In addition, the current collector body 712 may have a height that allows an upper surface thereof to be coupled to the terminal of the battery when the current collector 710 is assembled and coupled to the current collector plate 720.

The flange 713 may be disposed between the coupling protrusion 711 and the current collector body 712. When the coupling protrusion 711 is fitted into the coupling hole H, the flange 713 may come into face-to-face contact with the current collector plate 720. In various embodiments, the coupling protrusion 711 may be fitted into the coupling hole H from an upper surface of the current collector plate 720 such that the lower surface of the flange 713 comes into contact with an upper surface of the current collector plate 720.

A planar size of the flange 713 may be larger than that of the coupling protrusion 711 as well as the current collector body 712. Accordingly, when the coupling protrusion 711 is fitted into the coupling hole H, a contact area between the lower surface of the flange 713 and the upper surface of the current collector plate 720 may be as large as possible. As a result, resistance that may occur between the current collector plate 720 and the current collector 710 can be minimized or reduced. In various embodiments, the planar shape of the flange 713 may be a circular shape with a certain (e.g., predetermined) diameter (second diameter), but is not limited thereto, and may be an elliptical or polygonal shape. If the planar shape of the flange 713 is a circular shape, the flange 713 may have a generally cylindrical shape with a certain (e.g., predetermined) height (second height).

The current collector plate 720 connected to the tab member 301 or 302 (see FIG. 6) of the battery may be assembled and coupled to the current collector 710. In various embodiments, the current collector 710 and the current collector plate 720, in an assembled and coupled state, may be joined to each other through butt welding. Accordingly, a welding strength can be improved compared to joining through lap welding. As a result, a bonding strength between the current collector 710 and the current collector plate 720 may be improved.

The current collector plate 720 may include a first sub-plate 721 and one or more second sub-plates 722 and 723. In various embodiments, as shown in FIG. 7A, the current collector plate 720 may include the first sub-plate 721 and two second sub-plates 722 and 723 extending from both, or opposite, sides thereof, or, in another embodiment, the current collector plate 720 may include the first sub-plate 721 and only one second sub-plate 722 or 723 extending from one side thereof.

The first sub-plate 721 forms a central portion of the exterior of the current collector plate 720, and may be coupled and connected to the current collector 710. A coupling hole H with a certain (e.g., predetermined) size and shape may be formed in the first sub-plate 721. The coupling hole H may be located in a portion to which the current collector 710 is coupled. The coupling hole H may have a structure that allows the coupling protrusion 711 formed on a lower surface of the current collector 710 to be inserted and coupled. In various embodiments, a size and shape of the coupling hole H may correspond to the size and shape of the coupling protrusion 711 formed on the lower surface of current collector 710. However, the shape of the coupling hole H is not limited to a circular shape and may have shapes such as an elliptical or quadrangular shape.

The second sub-plates 722 and 723 may extend in the second direction from one side or both, or opposite, sides of the first sub-plate 721. According to various embodiments, the second sub-plates 722 and 723 may not lie on the same plane as the first sub-plate 721 but may form parallel planes at a different height. In various embodiments, each of the second sub-plates 722 and 723 may be bent twice at a boundary with the first sub-plate 721 such that the second sub-plates 722 and 723 are located closer to the second tab member 302 side than the first sub-plate 721 (i.e., the second sub-plates 722 and 723 are located below the first sub-plate 721), as shown in FIG. 7A. As a result, the second sub-plates 722 and 723 may protrude further toward the lower surface of the current collector plate 720 than the first sub-plate 721.

Referring to FIG. 1, in various embodiments, a plurality of secondary batteries 2 are provided. The plurality of secondary batteries 2 may be arranged in two or more rows in at least one direction of a length direction (an X-axis direction based on FIG. 1) or a width direction (a Y-axis direction based on FIG. 1) of the housing 10. In FIG. 1, a case in which the plurality of secondary batteries 2 are arranged in six rows in the length direction of the housing 10 is illustrated as an example, but an arrangement form of the plurality of secondary batteries 2 is not limited thereto, and may be variously changed. The plurality of secondary batteries 2 may be arranged side by side. A number of secondary batteries 2 may be variously changed depending on a size, shape, or the like of the housing 10.

The first terminal 420 of one of a pair of adjacent secondary batteries 2 and the second terminal 430 of the other one of the pair of adjacent secondary batteries 2 may be disposed to face each other in the length direction of the housing 10. That is, the front surface portion 120 of one of the adjacent secondary batteries 2 may be disposed to face the rear surface portion 130 of the other one of the adjacent secondary batteries 2.

The plurality of secondary batteries 2 may be electrically connected by bus bars 3. The bus bar 3 may be disposed between the cover 12 and the secondary battery 2. A plurality of bus bars 3 may be provided. Each of the bus bars 3 may connect a pair of adjacent secondary batteries 2 in series or parallel.

As an example, both, or opposite, sides of the bus bar 3 may be connected to the first terminal 420 of one of the pair of adjacent secondary batteries 2 and the second terminal 430 of the other one of the pair of adjacent secondary batteries 2, respectively. Accordingly, the plurality of secondary batteries 2 may be connected in series with each other by the bus bars 3. However, a connection form of the bus bar 3 is not limited thereto, and, in various embodiments, both, or opposite, sides are respectively connected to the first terminal 420 of one of the pair of adjacent secondary batteries 2 and the second terminal 430 of the other one of the pair of adjacent secondary batteries 2, or that both, or opposite, sides are respectively connected to the second terminal 430 of one of the pair of adjacent secondary batteries 2 and the second terminal 430 of the other one of the pair of adjacent secondary batteries.

The bus bar 3 may be formed of an electrically conductive material, such as copper, aluminum, nickel, or the like. A specific shape of the bus bar 3 is not limited to that shown in FIG. 1, and may be variously changed so as to electrically connect the adjacent secondary batteries 2.

The plurality of bus bars 3 may be supported inside the housing 10 by a bus bar holder H. In various embodiments, the bus bar holder H may be formed to have a shape of a flat plate. The bus bar holder H may be disposed between the cover 12 and the secondary batteries 2. The bus bars 3 may be fixed to the bus bar holder H by any of various types of coupling methods, such as fitting coupling, bolting, injection coupling, and the like. In various embodiments, the bus bar holder H may include a polymer compound material that is electrically insulative.

According to one or more embodiments, a current collector and a current collector plate can be assembled and coupled using methods such as male-female fitting, which allows for easy positioning during assembly, thereby facilitating the manufacturing of a current collector assembly and enhancing a coupling strength at a coupled portion. In addition, the current collector can be manufactured through a forging process, which reduces the generation of scrap compared to conventional press processes, thereby preventing or substantially preventing material waste and lowering manufacturing costs.

However, it will be appreciated by persons skilled in the art that aspects and effects that can be achieved through the present invention are not limited to those described herein and that other aspects, effects, and advantages will be more clearly understood from the detailed description.

While the above invention has been described with reference to some example embodiments illustrated in the accompanying drawings, it is to be understood that the invention is not limited to the disclosed embodiments, but also covers various modifications and equivalent arrangements included within the scope of the claims.

Accordingly, the scope shall be determined according to the claims.

## Claims

1. A battery comprising:
a case (100);
an electrode assembly (200) accommodated in the case (100) and comprising an electrode;
a tab (301, 302) connected to the electrode and extending from the electrode assembly (200);
a cap assembly (400) facing the electrode assembly (200) and comprising a terminal (420, 430); and
a current collector assembly (500, 600, 700) between the electrode assembly (200) and the cap assembly (400), and comprising a current collector plate (720) joined to the tab, and a current collector (510, 610, 710) coupled to the current collector plate (520, 620, 720) and joined to the terminal (420, 430).

2. The battery as claimed in claim 1, wherein the current collector (510, 610, 710) and the current collector plate (520, 620, 720) are assembled through a male-female fitting.

3. The battery as claimed in claim 1 or 2, wherein
the current collector (510, 610, 710) comprises a coupling protrusion (711) at an end portion of the current collector (510, 610, 710), and
the current collector plate (520, 620, 720) comprises a coupling hole into which the coupling protrusion (711) is insertable and couplable.

4. The battery as claimed in claim 3, wherein the current collector (510, 610, 710) comprises a current collector body (712) joined to the terminal (420, 430) through another end portion of the current collector (510, 610, 710), and a flange (713) between the current collector body (712) and the coupling protrusion (711) to be in direct physical contact with the current collector plate (520, 620, 720).

5. The battery as claimed in claim 4, wherein the current collector body (712), the flange (713), and the coupling protrusion (711) are integrally formed.

6. The battery as claimed in claim 4 or 5, wherein
the current collector body (712) has a cylindrical shape with a first diameter and a first height, and
the flange (713) has a cylindrical shape with a second diameter greater than the first diameter and a second height less than the first height.

7. The battery as claimed in any one of claims 4 to 6, wherein the current collector body (712) is forged of a round bar material.

8. The battery as claimed in any one of claims 1 to 7, wherein the current collector (510, 610, 710) and the current collector plate (520, 620, 720) are joined through butt welding.

9. The battery as claimed in any one of claims 3 to 7, wherein the current collector plate (520, 620, 720) comprises a first sub-plate (521, 621, 721) in which the coupling hole is defined, and a second sub-plate (522, 523, 622, 623, 722, 723) extending from at least one side of the first sub-plate (521, 621, 721) and joined to the tab (301, 302).

10. The battery as claimed in claim 9, wherein
the tab (301) comprises an inner tab (310, 330) and an outer tab (320, 340), which extend from the electrode of a same polarity in the electrode assembly (200) and are spaced apart from each other, and
the second sub-plate (522, 523, 622, 623, 722, 723) comprises an inner plate joined to the inner tab, and an outer plate joined to the outer tab, wherein the inner plate and the outer plate extend from opposite sides of the first sub-plate (521, 621, 721).

11. The battery as claimed in claim 1 or 2, wherein the current collector plate (520, 620, 720) comprises a first sub-plate (721) comprising a first surface not in direct physical contact to the tab, and a second sub-plate (722, 723) extending from at least one side of the first sub-plate (721) and comprising a first surface joined to the tab; and
wherein the current collector (510, 610, 710) is joined to the terminal (420, 430) through a coupling of the current collector to a second surface of the first sub-plate (721).

12. The battery as claimed in claim 11, wherein
the current collector (510, 610, 710) comprises a coupling protrusion (711) at an end portion of the current collector (510, 610, 710), and
the first sub-plate (721) comprises a coupling hole into which the coupling protrusion (711) is insertable and couplable.

13. The battery as claimed in claim 12, wherein
the current collector (510, 610, 710) further comprises a current collector body (712) joined to the terminal (420, 430) through another end portion of the current collector (710), and a flange (713) between the current collector body (712) and the coupling protrusion (711) to be in direct physical contact with the second surface of the first sub-plate (721), and
the current collector body (712), the flange (713), and the coupling protrusion (711) are integrally formed.

14. The battery as claimed in claim 13, wherein
the current collector body (712) has a cylindrical shape with a first diameter and a first height, and
the flange (713) has a cylindrical shape with a second diameter greater than the first diameter and a second height less than the first height.

15. A battery pack comprising:
a housing (10); and
a plurality of batteries in accordance with any one of claims 1 to 14 accommodated in the housing (10).
